# EUROPEAN PATENT SPECIFICATION

(11) **EP 1 805 759 B1**
(45) Date of publication and mention of the grant of the patent: **03.09.2008**
(21) Application number: 05789054.3
(22) Date of filing: 07.10.2005
(51) Int. Cl.: G11B 19/00, G11B 23/40, B41J 3/407

(54) **AN OPTICAL RECORDING APPARATUS WITH REDUCED POWER CONSUMPTION**
OPTISCHE AUFNAHMEVORRICHTUNG MIT VERRINGERTEM STROMVERBRAUCH
APPAREIL D'ENREGISTREMENT OPTIQUE A CONSOMMATION REDUITE

(30) Priority: 18.10.2004 EP 04105123
(43) Date of publication of application: 11.07.2007
(73) Proprietor: Koninklijke Philips Electronics N.V., 5621 BA Eindhoven (NL)
(72) Inventor: VAN DER KALL, Herman, NL-5656 AA Eindhoven (NL); RAAYMAKERS, Jeroen, A., L., J., NL-5656 AA Eindhoven (NL)
(74) Representative: Uittenbogaard, Frank
(86) International application number: PCT/IB2005/053304
(87) International publication number: WO 2006/043188

(56) References cited:
- US-A1- 2002 191 517
- US-A1- 2003 108 708

## Description

The present invention relates to an optical recording apparatus capable of writing information on an optical medium in a writing mode and capable of writing a label image on an optical medium in a label mode.

Conventional optical recording devices are configured to write data to an optical medium by a process, where a laser beam from the optical recording device selectively raise the temperature on certain areas on the optical medium causing a change in the optical properties of the selected areas. Often this process is called "burning". Thus, information is provided on the optical medium, the information being represented in a binary form, i.e. 1's and 0's, which are afterwards readable by an optical reading device. Usually, optical recording devices are integrated with such an optical reading device.

Standard formats are given for compact discs (CD), such as writable compact disc (CD-R) and re-writable compact disc (CD-RW), and digital versatile discs (DVD), such as re-writable digital versatile discs (DVD+RW, DVD-RW or DVD-RAM) and writable digital versatile discs (DVD+R and DVD-R). Recently, the Blu-ray Disc format has also emerged.

After writing information to an optical medium (the disc), the user may decide to label the optical medium so as to distinguish one recorded optical disc from the other. Hitherto, stickers and special speed markers were effectively the only possibilities to most consumers, and both options represent problems in terms of durability, compatibility with the optical medium, stability during optical reading, etc.

Recently, the so-called LightScribe^{™} technology has emerged, which solves many of the aforementioned problems. This method applies the laser for writing information to a new purpose; i.e. for writing a label image on the non-data side of the optical medium. After turning over the optical medium in the optical recording device, so that the laser enters on the non-data side, the laser writes a pattern of dots on the optical medium so as to form a label image. Preferably, the label image is chosen by the user. In some design, there is located an extra dedicated laser on the non-data side of the optical medium in the optical recording apparatus, thus the optical medium need not be turned over for label writing.

However, an inherent problem with the LightScribe^{™} technology is the low rotational frequency of the optical medium, typically a few Hz, which substantially limits the wind cooling otherwise provided by the rotation of the optical medium, typically 20 up to 160 Hz. Especially, for label writing this problem becomes more acute as the laser typically is on full power for extended periods of time. Thus, a temperature problem results. A dedicated fan can solve this temperature problem, but this solution complicates the design and raises the cost of the drive and the manufacturing. The temperature problem may cause a heat up of parts of the optical recording apparatus above the specified temperature, e.g. lasers are typically specified to operate below a temperature of 75°C.

Hence, an improved optical recording apparatus with the ability of writing a label image on the non-data side of the optical medium would be advantageous, and in particular a more efficient and/or reliable optical recording apparatus would be advantageous.

Accordingly, the invention preferably seeks to mitigate, alleviate or eliminate one or more of the above mentioned disadvantages singly or in any combination. In particular, it may be seen as an object of the present invention to provide an optical recording apparatus that solves the above mentioned problems of the prior art with temperature raise during label image writing of an optical medium. Especially, it may be seen as an object to provide an optical recording apparatus, which solves the problem with temperature raise during label writing in a simple and cost efficient manner.

This object and several other objects are obtained in a first aspect of the invention by providing an optical recording apparatus capable of writing information on an optical medium in a writing mode and capable of writing a label image on an optical medium in a label mode, the apparatus comprising:
- holding means adapted to fix and rotate the optical medium,
- an optical head adapted to be displaced by actuation means in a radial direction of the optical medium, the optical head comprising;
- a radiation source capable of emitting radiation for writing information in writing mode, and capable of emitting radiation for writing a label image in label mode,
- at least one objective lens adapted to focus the radiation to a radiation spot onto the optical medium, the objective lens being displaceable by lens displacement means,
- one or more processing means adapted to:
   - analyze the radiation reflected from the optical medium,
   - control the radial position of the optical head,
   - control the focal point of the radiation relative to the optical medium, and
   - control the radiation source,
wherein the optical recording apparatus in label mode is adapted to, at least partly, turn off at least one of said one or more processing means at least for a pre-defined period of time.

The invention is particularly, but not exclusively advantageous in that the present invention may be applied by relatively small or no modifications of optical recording devices already known in the art. Thus, the invention can be readily implemented with immediate result on the temperature of the optical recording apparatus during label mode.

Processing means is understood to mean any means suitable for performing calculations, for example a processor, a microprocessor, a digital signal processor, a hard-wired analog circuit or a field programmable circuit in the context of this application. Furthermore, devices for manipulating an electric signal may also be considered as part of the processing means, even though the devices are physically separate entities and only electrically connected. Examples may comprise filters, discriminators, amplifiers, etc. Thus, such manipulating devices may be considered to form part of one or more processing means. In particular, processing means are also meant to include photo detection means converting radiation to one or more electric signals.

Advantageously, at least one of said one or more processing means that are turned off may be capable of encoding information to be written on the optical medium. Similarly, at least one of said one or more processing means may be capable of decoding information to be read from the optical medium. As the processing means for encoding and decoding dissipates a relatively high amount of power, these embodiments of the invention provides a significant power reduction.

During writing mode, the optical recording apparatus may comprise one or more processing means adapted to control the radial position of the optical head by a closed loop feedback control scheme, and similarly, one or more processing means adapted to control the focal point of the radiation relative to the optical medium by a closed loop feedback control scheme. However, these processing means may advantageously be turned off during the label mode, possibly only partly turned off.

At least one of said processing means may - during label mode - alternate between at least two different power levels at least for a pre-defined period of time, for reduced power dissipation. The turned off condition is per definition an applied power level of substantially 0 W. Thus, the processing means may be operated in a duty cycle for reduced power consumption. Possibly, the processing means may only be partly turned on during the turned on periods of the duty cycle, i.e. with an applied power below the nominal or specified power.

The displacement means may comprise radial tilt means for rotating the lens around an axis, the axis being positioned in a plane substantially parallel to the optical medium and in a direction orthogonal to a radial direction of the optical medium. The radial tilt means may be adapted to be, at least partly, turned off in label mode, possibly just for a pre-defined period of time.

Advantageously, the processing means comprise a photodetector, the photodetector may be adapted to be, at least partly, turned off in label mode at least for a pre-defined period of time. This may provide a significant reduction in the power dissipated, possibly up to 0.3 W for a typical optical recording apparatus.

In a second aspect, the invention relates to a method for controlling an optical recording apparatus, the method comprises a write mode, wherein information is written on an optical medium, the write mode comprising the following operations:
- fixing and rotating the optical medium by holding means,
- displacing by actuation means an optical head in a radial direction of the optical medium, the optical head comprising;
   - a radiation source capable of emitting radiation for writing information,
   - at least one objective lens adapted to focus the radiation to a radiation spot onto the optical medium, the objective lens being displaceable by lens displacement means and
- analyzing and/or controlling:
   - the radiation reflected from the optical medium,
   - the radial position of the optical head,
   - the focal point of the radiation relative to the optical medium, and
   - the radiation source,
by one or more processing means.

And, the method comprises a label mode, wherein a label image is written on an optical medium, the label mode comprising the following operations:
- fixing and rotating the optical medium by holding means,
- displacing by actuation means the optical head in a radial direction of the optical medium, the optical head comprising;
   - a radiation source capable of emitting radiation for writing a label image,
   - at least one objective lens adapted to focus the radiation to a radiation spot onto the optical medium, the objective lens being displaceable by lens displacement means and
- analyzing and/or controlling:
   - the radiation reflected from the optical medium,
   - the radial position of the optical head,
   - the focal point of the radiation source relative to the optical medium, and
   - the radiation source,
by one or more processing means,
wherein the optical recording apparatus - in said label mode - is adapted to, at least partly, turn off at least one of said one or more processing means at least for a pre-defined period of time.

This aspect of the invention is particularly, but not exclusively advantageous in that the present invention provides an improved method for operating an optical recording device with a reduced power consumption (and as a result a reduced temperature) of the device during label writing as an immediate result.

In a third aspect, the invention relates to a computer program product being adapted to enable a computer system comprising at least one computer having data storage means associated therewith to control an optical recording apparatus according to the second aspect of the invention.

This aspect of the invention is particularly, but not exclusively advantageous in that the present invention may be implemented by a computer program product enabling a computer system to perform the operations of the second aspect of the invention. Thus, it is contemplated that some known optical recording devices may be changed to operate according to the present invention by installing a computer program product on a computer system controlling the said optical recording device. Such a computer program product may be provided on any kind of computer readable medium, e.g. magnetically or optically based medium, or through a computer based network, e.g. the Internet.

The first, second, and third aspects of the present invention may each be combined with any of the other aspects.

These and other aspects of the invention will be apparent from and elucidated with reference to the embodiments described hereinafter.

US-A1-2002/191517 discloses a prior art apparatus which defines the features of the preamble of claim 1 and a method of label writing defining the preamble of claim 9.

The present invention will now be explained with reference to the accompanying Figs., where
Fig. 1 is a schematic diagram of an embodiment of an optical recording apparatus according to the invention,
Fig. 2 is a graph of the applied power versus time for processing means according to the invention,
Fig. 3 is a graph of the applied power versus time for processing means operated in a duty cycle mode of operation according to the invention,
Fig. 4 is a graph of the applied power versus time for processing means operated in duty cycle mode of operation with a reduced power level according to the invention, and
Fig. 5 is a graph of the applied power versus time for processing means operated in alternative duty cycle mode of operation according to the invention.

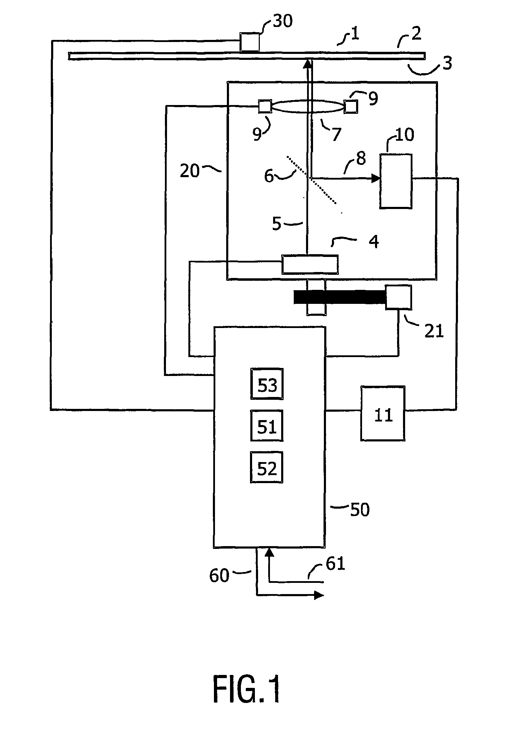

Figure 1 shows an optical recording apparatus and an optical recording medium 1 according to the invention. The medium 1 has a data side 2 and non-data side layer 3 arranged on it. In the embodiment, displayed in Figure 1 the medium 1 is arranged with the non-data side 3 facing the optical head 20. Thus, the optical medium 1 is in a position for label writing in Figure 1. The medium 1 is fixed and rotated by holding means 30.

The data side 2 comprises a material suitable for recording information by means of a radiation beam 5. The recording material may be of, for example, the magneto-optical type, the phase-change type, the dye type, metal alloys like Cu/Si or any other suitable material. Information may be recorded in the form of optically detectable regions, also called marks, on the data side 2.

The non-data side 3 of the optical medium 1 may comprise laser-sensitive materials like infrared sensitive dye or heat sensitive dye, possible dyes that are activatable at a first temperature or laser power and deactivatable at a second temperature or laser power. By variation of the laser power the dye may obtain various colors depending on the laser power. For a list of appropriate materials see e.g. the materials listed in US 2003 0108708. The optical medium 1 is normally of a circular form but other shapes are possible.

The apparatus comprises an optical head 20, the optical head 20 being displaceable by actuation means 21, e.g. an electric stepping motor. The optical head 20 comprises a photo detection system 10, a radiation source 4, a beam splitter 6, an objective lens 7, and lens displacement means 9.

The function of the photo detection system 10 is to convert radiation 8 reflected from the medium 1 into electrical signals. Thus, the photo detection system 10 comprises one or more photo detectors, e.g. photodiodes, charged coupled devices (CCD), capable of generating one or more electric output signals that are transmitted to a pre-processor 11. The one or more photo detectors can be arranged spatially to one another, and with a sufficient time resolution so as to be enable detection of focus and radial tracking errors in the pre-processor 11. Thus, the pre-processor 11 can transmit focus and radial tracking error signals to the processor 50. The photo detection system 10 can also transmits a read signal representing the information being read from the medium 1 to the processor 50.

The radiation source 4 for emitting a radiation beam 5 can for example be a semiconductor laser with a variable power, possibly also with variable wavelength of radiation. Alternatively, the radiation source 4 may comprise more than one laser. Especially, if the optical recording apparatus is capable of function as an optical reading apparatus the radiation source 4 may comprise a dedicated reading laser for reading information from the medium 1. Such a reading laser will typically have a lower power output relative to a writing laser.

The optical head 20 is optically arranged so that the radiation beam 5 is directed to the optical medium 1 via a beam splitter 6, and an objective lens 7. Radiation 8 reflected from the medium 1 is collected by the objective lens 7 and, after passing through the beam splitter 6, falls on a photo detection system 10 which converts the incident radiation 8 to output signals as described above.

In this embodiment, the processor 50 receives and analyses output signals from the pre-processor 11. The processor 50 can also output control signals to the actuation means 21, the radiation source 4, the lens displacement means 9, and the holding means 30, as illustrated in Figure 1. Similarly, the processor 50 can receive data, e.g. information to be written or a label image to be written, indicated at 61, and the processor 50 may output data from the reading process at data side 2 as indicated at 60.

The processor 50 is divided into blocks 51, 52, and 53. For illustrative purposes only, the three blocks 51, 52, and 53 are shown as separate physical distinct entities, the blocks may as well be a single integrated entity or two distinct entities. Block 51 comprises processing means for encoding information to be written on the data-side 2 of the medium 1. The block 51 also comprises processing means for decoding information to be read from the medium 1. Block 52 comprises processing means for digital signal processing (DSP). The processor 50 comprises a block 53 with processing means similar to a microprocessor for overall control and operation of the processor 50.

When the optical recording apparatus shown in Figure 1 is operated in a label mode, the present invention principally describes that at least one of said one or more processing means 10, 11, 51, 52, and 53 at least for a pre-defined period of time, are adapted to be turned off, possibly only partly turned off.

More specifically, the label mode may be further subdivided into a first and second label mode. The first label mode comprises preliminary steps for label writing, i.e. focus control or recalibration (learning) in to order to focus the radiation 5 on the non data side 3 for label writing, medium 1 recognition by the optical recording apparatus, and readout of control data on one or more specially dedicated areas on the medium 1. The second label mode is the actual label writing mode where sequences of dark and light dots are written in concentric circles on the non-data side 3. Dark dots are generated by applying a high power, e.g. 35 mW by an infrared laser, and light dots are generated by applying no or low power by an infrared laser. The labels are written at a constant linear velocity of the medium 1 generated by the holding means 30.

In Table 1, some selected components and parts of the optical recording apparatus are listed and arranged according to their power status during the writing mode and the first and second label mode. Various components or parts of the optical recording apparatus are listed in the column on the far left. The list of components or parts is non-exhaustive, i.e. other components or parts of an optical recording apparatus known to the skilled person may function according the present invention. Then follows a column where the listed parts or components are categorized as A, B, and C depending on the power status during the writing mode and the label mode, as will be explained below. In the three columns in the right part of Table 1, the power status during the writing mode and the first and second label modes, respectively, are given as "on" or "off". By "on" is meant that the applied power level is substantially equal to the nominal power level. "Off" is defined as application of substantially no power, e.g. 0 W. However, it should be noticed, that in some embodiments one or more components or parts can be partly turned on or partly turned off. Furthermore, parts or components may be subdivided into several sections where some sections may be "on" while others may be "off".

**Table 1:**

| Component/Part | Category | Writing mode (information written on medium 1) | Label mode | |
|---|---|---|---|---|
| | | | First label mode (medium 1 recognition, learning focus, etc.) | Second label mode (printing label image) |
| Photodetecting means 10 | A | on | on | off |
| Pre-processor 11 | A | on | on | off |
| | | | | |
| DSP means 52 | B | on | on | on |
| Microprocessing means 53 | B | on | on | on |
| | | | | |
| Encoder/decoder means 51 | C | on | off | off |
| Radial tilt means | C | on | off | off |
| Radial/focal closed loop control means | C | on | off | off |

As seen in Table 1, category C is the parts or components that are on during writing and off during the first and second label mode. Thus, during the first and second label model the processing means 51 for encoding and decoding information are off completely. Similarly, if the radiation source 4 comprises a dedicated reading laser, e.g. a red laser for DVD applications, the reading laser can also be off during the first and second label mode.

During the writing mode, the focal and radial control is provided by a closed loop control scheme where parts of the processing means 11, 52, and 53 generates corresponding error signals that are minimized by variation of the focus and radial control parameters, respectively. In Table 1, these part of the processing means 11, 52, and 53 are named "Radial/focal closed loop control means", and because their are off during label mode they are of category C.

The lens displacement means 9 comprises means for so-called radial tilt, wherein the lens 7 is rotated around an axis, the axis being positioned in a plane substantially parallel to the optical medium 1 and in a direction orthogonal to a radial direction of the optical medium 1. The radial tilt means can also be turned off in first and second label mode, thus, the radial tilt means are of category C according to Table 1.

Category B is the components or parts that are on during the writing mode and the first and second label mode, respectively. During the second label mode the radiation source 4 for writing a label image should of course be on, but for focus tracking and control readout the radiation source 4 should also be on, i.e. in the first label mode. Similarly, processing means 52 and 53 for DSP and overall controlling, respectively, are also on during both first and second label modes as seen in Table 1.

Category A comprises the components or parts that are turned on in the first label mode and turned off in the second label mode. During the first label mode, the photo detection system 10 and the pre-processor 11 are on to allow focus learning (iterative optimization of focus position based on radiation 8 reflected from medium 1) for the label writing, but for the second label mode the photo detection system 10 and the pre-processor 11 are turned off to reduce power dissipation and therefore the temperature of the optical recording apparatus. As the start-up time for such photo detection systems 10 is typically vanishing, it is not a problem to alternate quickly between the first and second label mode. In the context of the present invention any filters, amplifiers, discriminators, trigger circuits, normalizer circuits, etc. (not shown in Figure 1) capable of manipulating in some way the electrical output signals from the photo detection system 10 are considered to form part of the processing means that may be off during the second label mode, possibly just partly turned off.

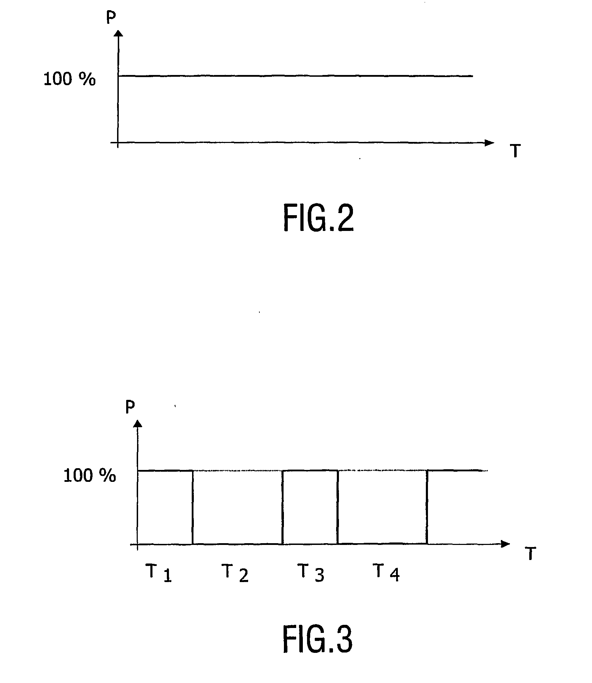

Figure 2 is a graph of the applied power versus time for photo detection means 10 and processing means 11 during the writing mode. The vertical axis indicates the applied power (P) for photo detection means 10 and processing means 11, whereas the horizontal axis indicates the time (T). Figure 2 illustrates a situation where the applied power is at a 100% level of the nominal power, and thus the photo detection means 10 and processing means 11 are - per definition - completely turned on.

Figure 3 is a graph similar to Figure 2 showing the applied power versus time for photo detection means 10 and processing means 11 but during the first and second label mode. In Figure 3, the applied power is only at a 100% level for a first, limited period of time, indicated as T₁ in Figure 3. In the second period of time, indicated as T₂ in Figure 3, the applied power is substantially 0 Watt. In the third period of time, indicated as T₃ in Figure 3, the applied power for the photo detection means 10 and processing means 11 is turned completely on again. In the fourth period of time, indicated as T₄ in Figure 3, the applied power is turned off again. Thus, the photo detection means 10 and processing means 11 are operated in a duty cycle with alternating levels of applied power. Thus, the first label mode corresponds to the periods marked T₁ and T₃, and the second label mode corresponds to the periods marked T₂ and T₄.

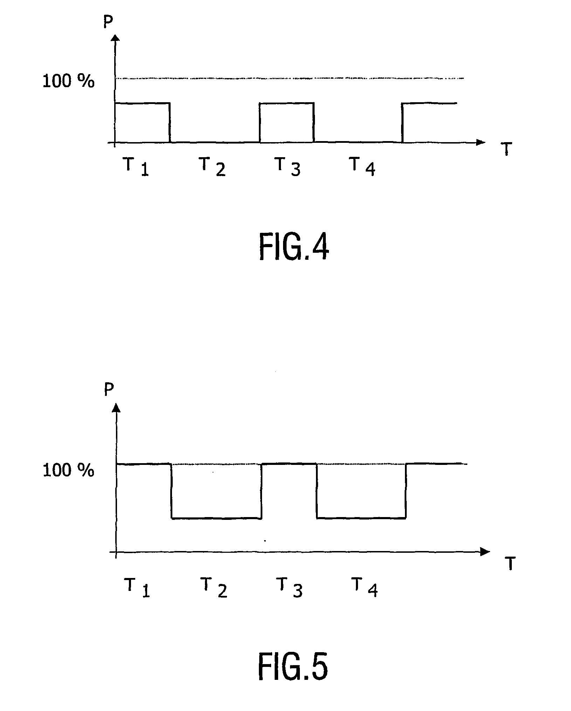

Figure 4 is a graph similar to Figure 3 of the applied power versus time for photo detection means 10 and processing means 11 operated in duty cycle mode of operation, but with a reduced power level during the turned on periods. Thus, during the periods marked T₁ and T₃ the applied power of the photo detection means 10 and processing means 11 is reduced below the 100% nominal power level but above 0 Watt. The reduced power level could be any power level between 1% and 99%, alternatively between 20% and 80%, possibly between 30% and 70%, of the nominal power level. When the photo detection means 10 and processing means 11 are operated at a reduced power below their nominal power supply, they may not function as specified at the nominal power level, but may nevertheless be able to operate in a satisfactory manner under the given circumstances.

Figure 5 is a graph similar to Figure 3 of the applied power versus time for photo detection means 10 and processing means 11 operated in duty cycle mode of operation with a reduced but non-vanishing power level during the turned off periods. Thus, during the periods marked T₂ and T₄ the applied power of the photo detection means 10 and processing means 11 is reduced below the 100% nominal power level but above 0 Watt. The reduced power level could be any power level between 1% and 99%, alternatively between 20% and 80%, possibly between 30% and 70%, of the nominal power level.

Figure 3, Figure 4 and Figure 5 illustrate embodiments of the invention, wherein photo detection means 10 and processing means 11 are off or has a reduced power level during the second label mode, e.g. the periods marked T₂ and T₄, so as to reduce the consumed power. The duration of the periods marked T₂ and T₄ are mainly determined by the stability and perfection of the optical recording apparatus and the optical medium 1, i.e. how often the optical recording apparatus needs to reenter a first label mode for focus control etc. For fast printing of a label image, the optical recording apparatus should be operated as long as possible in the second label image, wherein the actual label image writing is performed. Typically, a first label mode lasts 3 seconds, and a second label mode lasts about 60 seconds, though the initial first label mode may last longer. For an ideally stable optical recording apparatus, it is contemplated that a very limited amount of periods, wherein the optical recording apparatus operates in a first label mode, is needed, possibly only one initial period.

The invention provides noticeable result that efficiently reduces power consumption; thus, the temperature of the recording apparatus is reduced accordingly. Turning down the processing means 11 and 51 may generate up to 1.0 W of saved power. Shutting down photo detection system 10 can save 0.3 W. Thermal modeling and tests demonstrate a temperature reduction of up to 7.5°C for a typical recording apparatus during label mode operation.

Although the present invention has been described in connection with the specified embodiments, it is not intended to be limited to the specific form set forth herein. Rather, the scope of the present invention is limited only by the accompanying claims. In the claims, the term comprising does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. An optical recording apparatus capable of writing information on an optical medium (1) in a writing mode and capable of writing a label image on an optical medium (1) in a label mode, the apparatus comprising:
- holding means (30) adapted to fix and rotate the optical medium (1)
- an optical head (20) adapted to be displaced by actuation means (21) in a radial direction of the optical medium (1), the optical head (20) comprising:
- a radiation source (4) capable of emitting radiation (5) for writing information in writing mode, and capable of emitting radiation (5) for writing a label image in label mode,
- at least one objective lens (7) adapted to focus the radiation (5) to a radiation spot onto the optical medium (1), the objective lens (7) being displaceable by lens displacement means (9), and
- one or more processing means (10, 11, 50, 51, 52, 53) adapted to:
- analyze the radiation reflected (8) from the optical medium (1)
- control the radial position of the optical head (20),
- control the focal point of the radiation (5) relative to the optical medium (1), and
- control the radiation source (4),
**characterized in that**
the optical recording apparatus in label mode is adapted to, at least partly, turn off at least one of said one or more processing means (10, 11, 50, 51, 52, 53) at least for a pre-defined period of time.

2. An optical recording apparatus according to claim 1, wherein at least one of said one or more processing means (10, 11, 50, 51, 52, 53) is capable of encoding information to be written on the optical medium (1).

3. An optical recording apparatus according to claim 1, wherein at least one of said one or more processing means (10, 11, 50, 51, 52, 53) is capable of decoding information to be read from the optical medium (1).

4. An optical recording apparatus according to claim 1, wherein at least one of said one or more processing means (10, 11, 50, 51, 52, 53) is adapted to control the radial position of the optical head (20) by a closed loop feedback control scheme.

5. An optical recording apparatus according to claim 1, wherein at least one of said one or more processing means (10, 11, 50, 51, 52, 53) is adapted to control the focal point of the radiation (5) relative to the optical medium (1) by a closed loop feedback control scheme.

6. An optical recording apparatus according to any of the claims 1-5, wherein at least one of said processing means (10, 11, 50, 51, 52, 53) during label mode is alternating between at least two different power levels.

7. An optical recording apparatus according to claim 1, wherein the lens displacement means (9) comprises radial tilt means for rotating the lens (7) around an axis, the axis being positioned in a plane substantially parallel to the optical medium (1) and in a direction orthogonal to a radial direction of the optical medium (1), and said radial tilt means being adapted to be, at least partly, turned off in label mode at least for a pre-defined period of time.

8. An optical recording apparatus according to claim 1, wherein the processing means (10, 11, 50, 51, 52, 53) comprise a photodetector, said photodetector being adapted to be, at least partly, turned off in label mode at least for a pre-defined period of time.

9. A method for controlling an optical recording apparatus as disclosed in claim 1, the method comprises a write mode, wherein information is written on an optical medium (1), the write mode comprising the following operations:
- fixing and rotating the optical medium by holding means (30),
- displacing by actuation means (21) an optical head (20) in a radial direction of the optical medium (1), , and
- analyzing and/or controlling:
- the radiation (8) reflected from the optical medium (1),
- the radial position of the optical head (20),
- the focal point of the radiation (5) relative to the optical medium, and
- the radiation source (4),
by one or more processing means (10, 11, 50, 51, 52, 53).
And, the method comprises a label mode, wherein a label image is written on an optical medium (1), the label mode comprising the following operations:
- fixing and rotating the optical medium by holding means (30),
- displacing by actuation means (21) the optical head (20) in a radial direction of the optical medium (1), and
- analyzing and/or controlling:
- the radiation (8) reflected from the optical medium (1),
- the radial position of the optical head (20),
- the focal point of the radiation (5) relative to the optical medium (1), and
- the radiation source (4),
by one or more processing means (10, 11, 50, 51, 52, 53),
**characterized in that**
the method - in said label mode - further comprises the operation of, at least partly, turning off at least one of said one or more processing means (10, 11, 50, 51, 52, 53) at least for a pre-defined period of time.

10. A computer program product being adapted to enable a computer system comprising at least one computer having data storage means associated therewith to control an optical recording apparatus according to the method as claimed in claim 9.

## Patentansprüche

1. Optisches Aufzeichnungsgerät, das imstande ist Information auf ein optischen Medium (1) zu schreiben, und zwar in einer Schreibmode, und das imstande ist, ein Etikettbild auf ein optischen Medium (1)zu schreiben, und zwar in einer Etikettiermode, wobei das Gerät die nachfolgenden Elemente umfasst:
- Haltemittel (30), dazu vorgesehen, das optische Medium (1) zu fixieren und zu drehen,
- einen optischen Kopf (20), dazu vorgesehen, durch Betätigungsmittel (21) in einer radialen Richtung des optischen Mediums (1) verlagert zu werden,
wobei der optischen Kopf (20) Folgendes umfasst:
-- eine Strahlungsquelle (4), die imstande ist, Strahlung (5) zum Schreiben von Information in der Schreibmode auszusenden, und die imstande ist, Strahlung (5) zum Schreiben eines Etikettbildes in der Etikettiermode auszusenden,
-- wenigstens eine Objektivlinse (7), dazu vorgesehen, die Strahlung (5) zu einem Strahlungspunkt auf das optische Medium (1) zu fokussieren, wobei die Objektivlinse (7) durch Linsenverlagerungsmittel (9) verlagerbar ist, und
- ein oder mehrere Verarbeitungsmittel (10, 11, 50, 51, 52, 53), vorgesehen zum:
--- Analysieren der an dem optischen Medium (1) reflektierten Strahlung (8)
--- Steuern der radialen Lage der optischen Kopfes (20)
--- Steuern des Fokussierungspunktes der Strahlung (5) gegenüber dem optischen Medium (1), und
--- Steuern der Strahlungsquelle (4),
**dadurch gekennzeichnet, dass** das optischen Aufzeichnungsgerät in der Etikettiermode dazu vorgesehen ist, wenigstens eines der genannten Verarbeitungsmittel (10, 11, 50, 51, 52, 53) wenigstens teilweise auszuschalten, wenigstens während einer vorbestimmten Zeit.

2. Optisches Aufzeichnungsgerät nach Anspruch 1, wobei wenigstens eines oder mehrere der genannten Verarbeitungsmittel (10, 11, 50, 51, 52, 53) imstande ist, auf das optische Medium (1) zu schreibende Information zu codieren.

3. Optisches Aufzeichnungsgerät nach Anspruch 1, wobei wenigstens eines oder mehrere der genannten Verarbeitungsmittel (10, 11, 50, 51, 52, 53) imstande ist, Information, die aus dem optischen Medium (1) ausgelesen werden soll, zu decodieren.

4. Optisches Aufzeichnungsgerät nach Anspruch 1, wobei wenigstens eines oder mehrere der genannten Verarbeitungsmittel (10, 11, 50, 51, 52, 53) dazu vorgesehen ist, die radiale Lage des optischen Kopfes (20) durch ein Regelungsschema mit geschlossener Rückführung zu steuern.

5. Optisches Aufzeichnungsgerät nach Anspruch 1, wobei wenigstens eines oder mehrere der genannten Verarbeitungsmittel (10, 11, 50, 51, 52, 53) dazu vorgesehen ist, den Brennpunkt der Strahlung (5) in Bezug auf das optische Medium (1) durch ein Regelungsschema mit geschlossener Rückführung zu steuern.

6. Optisches Aufzeichnungsgerät nach einem der Ansprüche 1 - 5, wobei wenigstens eines der genannten Verarbeitungsmittel (10, 11, 50, 51, 52, 53) während der Etikettiermode zwischen wenigstens zwei verschiedenen Leistungspegeln umschaltet.

7. Optisches Aufzeichnungsgerät nach Anspruch 1, wobei die Linsenverlagerungsmittel (9) radiale Kippmittel zum Drehen der Linse (7) um eine Achse aufweisen, wobei die Achse in einer Ebene im Wesentlichen parallel zu dem optischen Medium (1) und in einer Richtung senkrecht zu einer radialen Richtung des optischen Mediums (1) liegt, und wobei die genannten radialen Kippmittel dazu vorgesehen sind, in der Etikettiermode während wenigstens einer vorbestimmten Zeit wenigstens teilweise ausgeschaltet zu werden.

8. Optisches Aufzeichnungsgerät nach Anspruch 1, wobei die Verarbeitungsmittel (10, 11, 50, 51, 52, 53) einen Photodetektor aufweisen, wobei der genannte Photodetektor dazu vorgesehen ist, in der Etikettiermode wenigstens während einer vorbestimmten Zeit wenigstens teilweise ausgeschaltet zu werden.

9. Verfahren zur Steuerung eines optischen Aufzeichnungsgeräts, wie in Anspruch 1 beschrieben, wobei das Verfahren eine Schreibmode umfasst, in der Information auf das optische Medium (1) geschrieben wird, wobei die Schreibmode die nachfolgenden Vorgänge umfasst:
- das Fixieren und Drehen des optischen Mediums mit Hilfe von Haltemitteln (30),
- das Verlagern eines optischen Kopfes (20) in radialer Richtung des optischen Mediums (1) mit Hilfe von Betätigungsmitteln (21) und
- das Analysieren und/oder Steuern
-- der an dem optischen Medium (1) reflektierten Strahlung (8),
-- der radialen Lage des optischen Kopfes (20),
-- des Brennpunktes der Strahlung (5) in Bezug auf das optische Medium, und
-- der Strahlungsquelle (4),
und zwar mit Hilfe eines oder mehrerer Verarbeitungsmittel (10, 11, 50, 51, 52, 53), und
wobei das Verfahren eine Etikettiermode umfasst, wobei auf ein optisches Medium (1) ein Etikettbild geschrieben wird, wobei die Etikettiermode die nachfolgenden Vorgänge umfasst:
- das Fixieren und Drehen des optischen Mediums mit Hilfe von Haltemitteln (30),
- das verlagern des optischen Kopfes (20) in einer radialen Richtung des optischen Mediums (1) mit Hilfe von Betätigungsmitteln (21), und
- das Analysieren und/oder Steuern
-- der an dem optischen Medium (1) reflektierten Strahlung (8),
-- der radialen Lage des optischen Kopfes (20),
-- des Brennpunktes der Strahlung (5) in Bezug auf das optische Medium (1), und
-- der Strahlungsquelle (4),
durch ein oder mehrere Verarbeitungsmittel (10, 11, 50, 51, 52, 53),
**dadurch gekennzeichnet, dass** das Verfahren in der genannten Etikettiermode weiterhin den Vorgang umfasst, in dem wenigstens eines oder mehrere der genannten Verarbeitungsmittel (10, 11, 50, 51, 52, 53) wenigstens während einer vorbestimmten Zeit wenigstens teilweise ausgeschaltet wird.

10. Computerprogrammprodukt, das dazu vorgesehen ist, dass es ermöglicht wird, dass ein Computersystem mit wenigstens einem Computer mit damit assoziierten Datenspeichermitteln ein optisches Aufzeichnungsgerät nach dem Verfahren nach Anspruch 9 gesteuert wird.

## Revendications

1. Appareil d'enregistrement optique qui est capable d'écrire de l'information sur un support optique (1) dans un mode d'écriture et qui est capable d'écrire une image d'étiquette sur un support optique (1) dans un mode d'étiquette, l'appareil comprenant:
- des moyens de maintien (30) qui sont adaptés de manière à fixer et à faire tourner le support optique (1),
- une tête optique (20) qui est adaptée de manière à être déplacée par des moyens d'actionnement (21) dans une direction radiale du support optique (1), la tête optique (20) comprenant:
- une source de rayonnement (4) qui est capable d'émettre du rayonnement (5) pour écrire de l'information dans le mode d'écriture et qui est capable d'émettre du rayonnement (5) pour écrire une image d'étiquette dans le mode d'étiquette,
- au moins une lentille d'objectif (7) qui est adaptée de manière à focaliser le rayonnement (5) vers un spot de rayonnement sur le support optique (1), la lentille d'objectif (7) étant mobile par des moyens de déplacement d'objectif (9), et
- un ou plusieurs moyens de traitement (10, 11, 50, 51, 52, 53) qui sont adaptés de manière à:
- analyser le rayonnement qui est réfléchi (8) à partir du support optique,
- commander la position radiale de la tête optique (20),
- commander le point focal du rayonnement (5) par rapport au support optique (1), et
- commander la source de rayonnement (4), **caractérisé en ce que** l'appareil d'enregistrement optique dans le mode d'étiquette est adapté de manière à arrêter, au moins partiellement, au moins un dudit un ou desdits plusieurs moyens de traitement (10, 11, 50, 51, 52, 53) au moins pendant une période prédéfinie de temps.

2. Appareil d'enregistrement optique selon la revendication 1, dans lequel au moins un dudit un ou desdits plusieurs moyens de traitement (10, 11, 50, 51, 52, 53) est capable de coder de l'information à écrire sur le support optique (1).

3. Appareil d'enregistrement optique selon la revendication 1, dans lequel au moins un dudit un ou desdits plusieurs moyens de traitement (10, 11, 50, 51, 52, 53) est capable de décoder de l'information à lire à partir du support optique (1).

4. Appareil d'enregistrement optique selon la revendication 1, dans lequel au moins un dudit un ou desdits plusieurs moyens de traitement (10, 11, 50, 51, 52, 53) est adapté de manière à commander la position radiale de la tête optique (20) par un arrangement de commande de rétroaction de boucle fermée.

5. Appareil d'enregistrement optique selon la revendication 1, dans lequel au moins un dudit un ou desdits plusieurs moyens de traitement (10, 11, 50, 51, 52, 53) est adapté de manière à commander le point focal du rayonnement (5) par rapport au support optique (1) par un arrangement de commande de rétroaction de boucle fermée.

6. Appareil d'enregistrement optique selon l'une quelconque des revendications précédentes 1 à 5, dans lequel au moins un desdits moyens de traitement (10, 11, 50, 51, 52, 53) pendant le mode d'étiquette est en cours d'alterner entre au moins deux niveaux de puissance différents.

7. Appareil d'enregistrement optique selon la revendication 1, dans lequel les moyens de déplacement d'objectif (9) comprennent des moyens d'inclinaison radiale pour faire tourner l'objectif (7) autour d'un axe, l'axe étant positionné dans un plan qui est sensiblement parallèle au support optique (1) et dans une direction qui est orthogonale par rapport à une direction radiale du support optique (1), et lesdits moyens d'inclinaison radiale étant adaptés de manière à être arrêtés, au moins partiellement, dans le mode d'étiquette au moins pendant une période prédéfinie de temps.

8. Appareil d'enregistrement optique selon la revendication 1, dans lequel les moyens de traitement (10, 11, 50, 51, 52, 53) comprennent un détecteur photosensible, ledit détecteur photosensible étant adapté de manière à être arrêté, au moins partiellement, dans le mode d'étiquette au moins pendant une période prédéfinie de temps.

9. Procédé pour commander un appareil d'enregistrement optique, tel que défini dans la revendication 1, le procédé comprenant un mode d'écriture dans lequel l'information est écrite sur un support optique (1), le mode d'écriture comprenant les opérations suivantes consistant à:
- fixer et à faire tourner le support optique par les moyens de maintien (30),
- déplacer, par les moyens d'actionnement (21), une tête optique (20) dans une direction radiale du support optique (1), et
- analyser et/ou à commander:
- le rayonnement (8) qui est réfléchi à partir du support optique (1),
- la position radiale de la tête optique (20),
- le point focal du rayonnement (5) par rapport au support optique, et
- la source de rayonnement (4),
par un ou plusieurs moyens de traitement (10, 11, 50, 51, 52, 53).
De même, le procédé comprend un mode d'étiquette dans lequel une image d'étiquette est écrite sur un support optique (1), le mode d'étiquette comprenant les opérations suivantes consistant à:
- fixer et à faire tourner le support optique par les moyens de maintien (30),
- déplacer, par les moyens d'actionnement (21), la tête optique (20) dans une direction radiale du support optique (1), et
- analyser et/ou à commander:
- le rayonnement (8) qui est réfléchi à partir du support optique (1),
- la position radiale de la tête optique (20),
- le point focal du rayonnement (5) par rapport au support optique (1), et
- la source de rayonnement (4),
par un ou plusieurs moyens de traitement (10, 11, 50, 51, 52, 53), **caractérisé en ce que** le procédé, dans ledit mode d'étiquette, comprend encore l'opération suivante consistant à arrêter, au moins partiellement, au moins un dudit un ou desdits plusieurs moyens de traitement (10, 11, 50, 51, 52, 53) au moins pendant une période prédéfinie de temps.

10. Produit de programme informatique étant adapté de manière à permettre à un système informatique comprenant au moins un ordinateur ayant des moyens de stockage de données y étant associés de commander un appareil d'enregistrement optique selon le procédé, tel que revendiqué dans la revendication 9.
